# EUROPEAN PATENT APPLICATION

(11) **EP 4 020 628 A1**
(43) Date of publication of application: **29.06.2022**
(21) Application number: 20868404.3
(22) Date of filing: 24.09.2020
(51) Int. Cl.: H01M 4/14, H01M 4/73, H01M 4/74

(54) **NEGATIVE PLATE FOR LEAD-ACID BATTERY, LEAD-ACID BATTERY, AND PRODUCTION METHOD FOR NEGATIVE PLATE FOR LEAD-ACID BATTERY**

(30) Priority: 27.09.2019 JP 2019176575
(71) Applicant: GS Yuasa International Ltd., Kisshoin, Minami-ku, Kyoto-shi, Kyoto 601-8520 (JP)
(72) Inventor: HIGASHIMURA, Yuki, Kyoto-shi, Kyoto 601-8520 (JP)
(74) Representative: Isarpatent
(86) International application number: PCT/JP2020/036068
(87) International publication number: WO 2021/060386

(57) **Abstract**

The present invention provides a negative electrode plate for a lead-acid battery, including: a negative current collector of 1 micron or more and 50 microns or less in surface average roughness Ra; and a negative electrode material of less than 2.0 microns in volume median pore diameter.

## Description

### TECHNICAL FIELD

The present invention relates to a negative electrode plate for a lead-acid battery, a lead-acid battery, and a method for manufacturing a negative electrode plate for a lead-acid battery.

### BACKGROUND ART

Lead-acid batteries are in use for various applications, including automotive and industrial applications. A lead-acid battery includes a negative electrode plate, a positive electrode plate, and an electrolyte solution. The negative electrode plate includes a current collector and a negative electrode material. The pore diameter of the negative electrode material varies depending on the manufacturing conditions and the type of the organic expander added, and changes with the charge-discharge cycle, but such changes and influences are not well known quantitatively. As the organic expander added, synthesized organic expanders are also used in addition to naturally derived organic expanders such as a sodium lignin sulfonate. Examples of the synthesized organic expanders include condensates of bisphenols.

Patent Document 1 describes a lead-acid battery characterized by containing a bisphenol condensation in a negative electrode material.

Patent Document 2 describes a lead-acid battery in which carbon fine particles as an additive enter the irregularities formed by roughening the surface of a negative current collector to reduce the resistance of a negative electrode plate.

### PRIOR ART DOCUMENTS

### PATENT DOCUMENTS

Patent Document 1: WO 2015-079631 A
Patent Document 2: JP-A-2017-33688

### SUMMARY OF THE INVENTION

### PROBLEMS TO BE SOLVED BY THE INVENTION

Lead-acid batteries may be deteriorated due to positive electrode plates or may be deteriorated due to negative electrode plates, and in specific applications, the electrode materials of the negative electrode plates may aggregate, thereby reducing the contact between the negative current collectors and the negative electrode materials, and thus leading to performance degraded. In particular, in the case of use for applications in which shallow discharge and charge are repeated as in automobile (including two-wheeled vehicle, three-wheeled vehicle, and four-wheeled vehicle) applications, the contact between the negative current collectors and the negative electrode materials is likely to be reduced.

### MEANS FOR SOLVING THE PROBLEMS

The present invention provides a negative electrode plate for a lead-acid battery, including: a negative current collector of which surface average roughness Ra is 1 micron or more and 50 microns or less; and a negative electrode material of which volume median pore diameter is less than 2.0 microns.

### BRIEF DESCRIPTION OF THE DRAWINGS

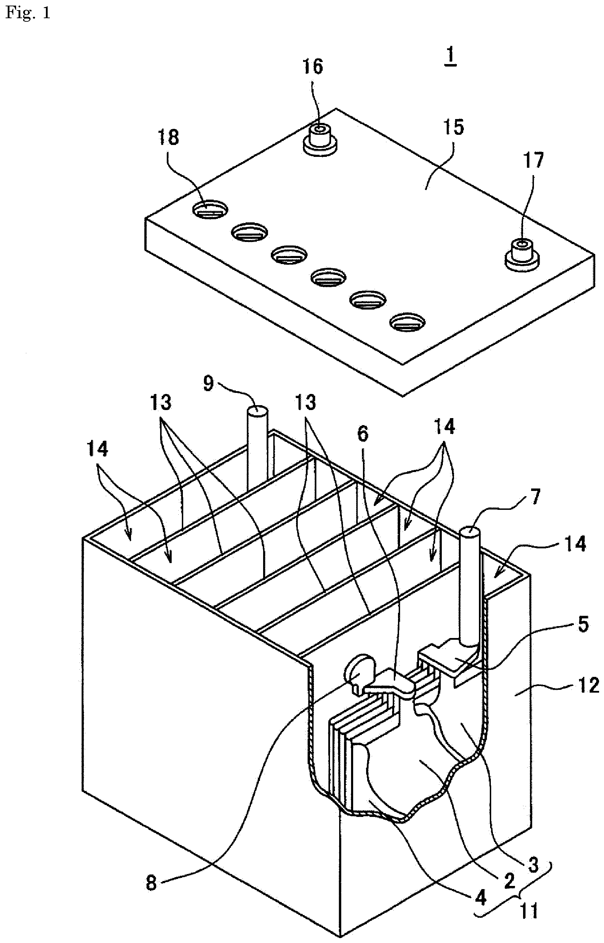

Fig. 1 is a partially cutaway exploded perspective view showing an appearance and an internal structure of a lead-acid battery according to one aspect of the present invention.

### MODE FOR CARRYING OUT THE INVENTION

A negative electrode plate for a lead-acid battery according to one aspect of the present invention includes a negative current collector and a negative electrode material.

In addition, the present invention also encompasses a lead-acid battery including the negative electrode plate mentioned above, a positive electrode plate, and an electrolyte solution.

Conventionally, a negative current collector and a negative electrode material are both made of metal lead or a lead alloy, and the adhesion is not poor between the collector and the material. However, when the collector and the material are subjected to the JIS D5301 (2019) test, which is a typical life test for simulating the actual use in an automobile battery, lead fine particles as an electrode material for the negative electrode plate gradually aggregate and coarsen, thereby generating gaps between the negative current collector and the negative electrode material, then losing the adhesion between the negative current collector and the negative electrode material, and thus degrading the battery performance. In particular, the low-temperature high-rate discharge performance required for an automobile battery decreases with charge-discharge, but as a result of performing various tests, it has been found that in the case where a negative electrode material with fine pores is formed on a current collector with predetermined surface roughness, lead fine particles do not easily aggregate, and the low-temperature high-rate discharge performance is thus less likely to be degraded.

In particular, the addition of a condensate including a bisphenol S unit and a phenol sulfonic acid unit has allowed the preparation of a negative electrode material according to the present invention with fine pore diameters of less than 2.0 microns in volume median pore diameter. The volume median pore size refers to a pore diameter at which the cumulative pore volume corresponds to 50% of the total pore volume, which is one of the definitions of the average pore diameter.

Further, examples of the method for forming fine pores in the negative electrode material include a method achieved by optimizing the manufacturing conditions (e.g., temperature, formation current), and a method achieved by adding an appropriate organic expander. If fine pores can be formed by the latter method, the mass production process will not be affected, such as no facility change, which is desirable, but the formation of fine pores is not to be considered limited to the method.

The bisphenol S unit refers to a unit derived from a bisphenol S compound incorporated in a condensate. The bisphenol S unit has a diphenyl sulfone skeleton, and the phenyl group may have a substituent. The phenol sulfonic acid unit refers to a unit derived from a phenol sulfonic acid compound incorporated in a condensate. The phenol sulfonic acid unit has a benzene skeleton having a sulfonic acid group or a salt thereof, and the benzene ring may have a substituent. Examples of the substituent include a substituent other than an amino group, and a substituent represented by R³ described later is preferable.

Even in the case fine pores are formed in the electrode material in a manner such as adding an appropriate organic expander, however, the coarsened lead fine particles as an electrode material for the negative electrode, the increased pore diameter of the electrode material, and the like are advanced with the cycle of charge-discharge, thereby increasing the performance degradation.

According to one aspect of the present invention, it has been found that the combination of the negative electrode material with fine pores of less than 2.0 microns and the negative current collector with fine irregularities of 1 micron or more and 50 microns or less allows the reduction of the performance degradation caused with the cycle of charge-discharge. In particular, an expanded grid or a punched grid formed by processing a lead or lead alloy sheet is suitable for the negative current collector of the present application, because the grid is easily subjected to a roughening treatment for providing the surface with fine irregularities.

In addition, the present invention also encompasses a lead-acid battery including the above-mentioned negative electrode plate for a lead-acid battery, a positive electrode plate, and an electrolyte solution. Such a lead-acid battery is excellent in low-temperature high-rate performance from the beginning, and small in performance degradation even in the case where the battery is further used repeatedly.

Hereinafter, the negative electrode plate for a lead-acid battery and the lead-acid battery according to an embodiment of the present invention will be described for each of the main constituent elements, but the present invention is not limited to the following embodiment.

### (Negative electrode plate)

The negative electrode plate includes a negative current collector and a negative electrode material.

The negative current collector may be formed by casting lead or a lead alloy, or may be formed by processing a lead sheet or a lead alloy sheet. Examples thereof include an expanding-type or punching-type current collector.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The surface of the negative current collector is provided with fine irregularities before applying the negative active material. In the case of an expanding-type or punching-type current collector, the surface of the current collector is roughened by rolling with a plate or the like that has a fine irregular part at the surface thereof, blasting, or the like in preparing an unprocessed lead or lead alloy sheet, after preparing the sheet and before processing the current collector, or during or after processing the current collector. In particular, the method of roughening the surface of the current collector by rolling with a plate or the like that has fine irregularities at the surface thereof has the advantage of facilitating mass production as compared with other methods. In the case of a casting-type current collector, it is efficient to provide the surface of a casting mold with fine irregularities. The surface roughness (Ra) of the current collector is preferably 1 micron or more and 50 microns or less, more preferably 2 microns or more and 20 microns or less.

Note that Ra refers to average surface roughness measured and calculated by the method defined in JIS B0601.

The negative electrode material contains an organic expander. The negative electrode material further contains a negative active material (lead or lead sulfate) that exhibits a capacity through a redox reaction. The negative electrode material may contain additives such as an expander other than the organic expander, a carbonaceous material, a barium sulfate, and fibers (e.g., resin fibers), and may contain other additives, if necessary.

In the case where the volume median pore diameter of the negative electrode material was less than 2.0 microns, the low-temperature high-rate performance was excellent over a long period of time. Some methods for reducing the pore diameter are conceivable, such as the optimization of the manufacturing conditions, and as long as the reduction can be achieved by adding an appropriate organic expander, existing facilities can be effectively utilized, which is preferable, and a condensate including a bisphenol S unit and a phenol sulfonic acid unit may be added.

In the organic expander, as the bisphenol S unit, a unit represented by the following formula (1) is preferable, and a unit represented by the following formula (1a) is further preferable. As the phenol sulfonic acid unit, a unit represented by the following formula (2) is preferable, and a unit represented by the following formula (2a) is further preferable. The use of an organic expander that has such units allows the formation of lead fine particles with fine pores, and makes it easy to secure high low-temperature high-rate performance. 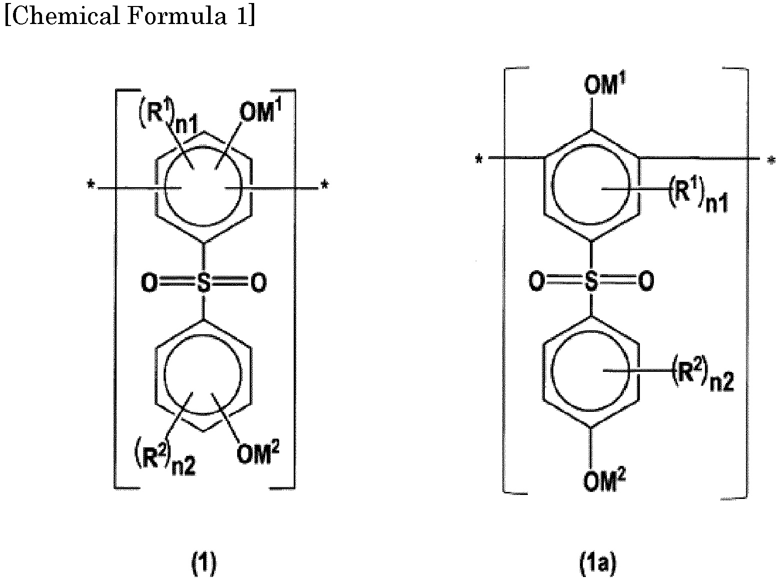 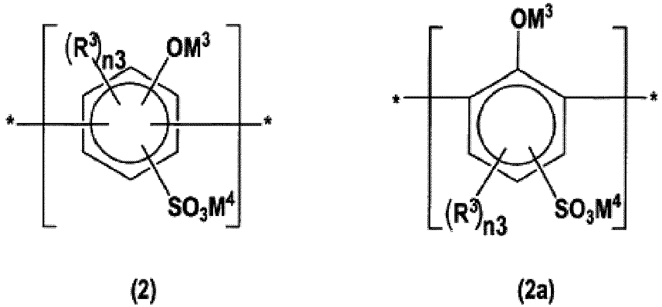 (in the formula, R¹, R², and R³ each represent an alkyl group or a - SO₃M⁵ group, M¹, M², M³, M⁴, and M⁵ each represent an alkali metal or a hydrogen atom, n1 and n3 are each an integer of 0 to 2, and n2 is an integer of 0 to 4. *represents a bond, and in the formula (1), the bonds are each located at the ortho position or para position with respect to an -OM¹ group, and in the formula (2), the bonds are each located at the ortho position or para position with respect to an -OM³ group.)

Examples of the alkyl group represented by R¹ to R³ include C₁₋₆ alkyl groups (preferably C₁₋₄ alkyl groups) such as methyl, ethyl, propyl, and butyl. Examples of the alkali metal represented by M¹ to M⁵ include sodium, potassium, and lithium.

n1 and n3 are each an integer of 0 to 2, and may be 0 or 1. n2 is an integer of 0 to 4, preferably an integer of 0 to 2, and may be 0 or 1. In the formula (1), the bonds are each preferably located at the ortho position with respect to the -OM¹ group. In the formula (2), the bonds are each preferably located at the ortho position with respect to the -OM³ group.

In the case of using an organic expander obtained by using a condensate including the bisphenol S unit (first unit) and the phenol sulfonic acid unit (second unit), the condensate may include one type of bisphenol S unit, or include two or more types of bisphenol S units. In addition, the condensate may include one type of phenol sulfonic acid unit, or include two or more types of phenol sulfonic acid units.

The molar ratio of the second unit to the total amount of the first unit and second unit is, for example, 10 mol% or more and 90 mol% or less, and preferably 20 mol% or more and 80 mol% or less.

In addition, the condensate may include a unit (third unit) having an aromatic ring, other than the bisphenol S unit and the phenol sulfonic acid unit. Examples of such a third unit include bisphenol units (for example, a bisphenol A unit and a bisphenol F unit) other than the bisphenol S unit, a biphenyl unit, a naphthalene unit, and a benzene unit. The third unit may have a substituent such as a hydroxy group, a sulfonic acid group or a salt thereof, an amino group, or an alkylamino group.

The molar ratio (= m3/m12) of the amount m3 of the third unit to the total amount m12 of the first unit and second unit is, for example, 0.2 or less, preferably 0.1 or less. In the case where the molar ratio of the third unit falls within such a range, the effect of the first unit and second unit are likely to be produced.

Examples of the organic expander including the first unit and the second unit include a condensate of a bisphenol S compound, a phenol sulfonic acid compound, and an aldehyde compound. Examples of the organic expander including the third unit include a condensate of a bisphenol S compound, a phenol sulfonic acid compound, a compound corresponding to the third unit, and an aldehyde compound. One type of organic expander may be used alone, or two or more types of organic expanders may be used in combination.

As the bisphenol S compound and the phenol sulfonic acid compound, a compound corresponding to the bisphenol S unit and a compound corresponding to the phenol sulfonic acid unit can be respectively used. As the bisphenol S compound, for example, a compound is preferable in which a bond of the unit represented by the formula (1) or (1a) is substituted with a hydrogen atom. As the phenol sulfonic acid unit compound, for example, a compound is preferable in which a bond of the unit represented by the formula (2) or (2a) is substituted with a hydrogen atom.

Examples of the aldehyde compound include a formaldehyde, a paraformaldehyde, and additionally, aldehyde condensates such as a trioxane and a tetraoxymethylene. One type of aldehyde compound may be used alone, or two or more types of aldehyde compounds may be used in combination. From the viewpoint of high reactivity with the bisphenol S compound and the phenol sulfonic acid compound, a formaldehyde is preferable.

The organic expander can be synthesized by known methods. For example, an organic expander can be obtained by condensing the bisphenol S compound, the phenol sulfonic acid compound, and if necessary, other components (such as an aldehyde compound). The condensation may be performed in the presence of a sulfite such as a sodium sulfite, thereby introducing a sulfonic acid group or a salt thereof into the condensate. In the case where the organic expander includes the third unit, a compound corresponding to the third unit may be condensed together with the bisphenol S compound and the phenol sulfonic acid compound (optionally, an aldehyde compound) to obtain an organic expander.

The condensate including the bisphenol S unit and the phenol sulfonic acid unit is preferably 0.01% by mass or more, more preferably 0.05% by mass or more with respect to the negative electrode material. The upper limit is preferably 1.0% by mass or less and more preferably 0.3% by mass or less.

Further, although the condensate including the bisphenol S unit and the phenol sulfonic acid unit has been described, the method is one of methods for forming fine pores in the negative electrode material, and fine pores can be also formed in the negative electrode material by methods that are different from the foregoing, such as the optimization of the manufacturing conditions.

Materials such as graphite, hard carbon, and/or soft carbon can be used as the carbonaceous material contained in the negative electrode material, carbon black. Examples of the carbon black include acetylene black, ketjen black, furnace black, lamp black, and the like. The graphite may be a carbon material including a graphite-type crystal structure and may be either artificial graphite or natural graphite.

The content of the carbonaceous material in the negative electrode material is, for example, preferably 0.05% by mass or more, more preferably 0.2% by mass or more. On the other hand, the content is preferably 4% by mass or less, more preferably 3% by mass or less, still more preferably 2% by mass or less. These lower limit values and upper limit values can be combined arbitrarily.

The negative electrode plate of the present application can be formed in such a manner that a negative current collector with a surface first roughened by the method described above is filled with the negative electrode paste, which is then cured and dried to prepare a non-formed negative electrode plate, and thereafter, the non-formed negative electrode plate is formed. The negative electrode paste is prepared by adding water and sulfuric acid to a lead powder, an organic expander, and if necessary, various additives and mixing the mixture. In the curing process, it is preferable to cure the non-formed negative electrode plate at room temperature or at a higher temperature and high humidity.

The formation can be performed by charging the negative electrode plate, with the element including the non-formed negative electrode plate immersed in the electrolyte solution containing a sulfuric acid, for example. In addition, the formation may be performed in a container of a lead-acid battery. After the elements and the lead-acid battery are assembled, the formation may be performed by charging with the element immersed in the electrolyte solution in the container. The formation produces spongy lead in the negative electrode plate.

The analysis of: the surface roughness of the negative current collector; the pore diameter of the negative electrode material; and the organic expander will be described below.

The surface roughness of the negative current collector and the additive such as an expander may be directly analyzed if the materials before finishing a battery are available, but if not, the materials are obtained by disassembling the lead-acid battery fully charged.

First, the fully charged lead-acid battery is disassembled, and the negative electrode plate is taken out, subjected to the removal of the sulfuric acid component by washing with water, and dried under vacuum (dried under a pressure that is lower than the atmospheric pressure). Next, the negative electrode material is separated from the negative electrode plate, and the current collector is further washed with water, and then dried under vacuum and stored. Further, in the case of any paper or fibrous separator-based member attached to the surface of the negative electrode plate, the member is desirably washed off as much as possible during the water washing, but even if somewhat left, no significant problem in measurement is caused because the electrode material and the separator-based member greatly differ in both mass and pore diameter.

### (A) Measurement of surface roughness of negative current collector

A relatively flat site of the current collector is selected, and the arithmetic average surface roughness Ra is measured with the use of "VK-X 100 LASER MICROSCOPE" from KEYENCE CORPORATION. The definition of Ra is as described in JIS B0601.

### (B) Measurement of volume median pore diameter of negative electrode material

The pore diameter of the negative electrode material is measured with the use of a porosimeter "Autopore IV 9505" from Shimadzu Corporation. The volume median pore diameter refers to a pore diameter at which the cumulative pore volume is 50% of the total pore volume.

### (C) Analysis of organic expander

### (C-1) Identification of type of expander

The type of the expander in the negative electrode material is identified as follows.

The electrode material is crushed so as to allow the material to be put in a case, and immersed in a 1 mol/L NaOH aqueous solution to extract the expander. The solution with insoluble components removed therefrom by filtration is desalted, and then concentrated and freeze-dried (freeze-dried) to obtain a powder sample. For the desalination, members are used, such as a dialysis membrane, a desalting column, and/or an ion exchange membrane. The type of the expander is identified with the use of information obtained from a spectrum such as an infrared spectroscopic spectrum or NMR spectrum measured with the use of the powder sample of the expander obtained as described above, or an ultraviolet-visible absorption spectrum measured by an ultraviolet-visible absorption spectrometer after the powder sample is further diluted with distilled water.

In the case where there is a possibility that the extract may contain therein multiple types of organic expanders, the separation and the determination are performed as follows. First, the extract is measured by infrared spectroscopy, NMR, and/or GC-MS to determine whether multiple types of expanders are contained or not. Next, a molecular weight distribution is measured by GPC analysis of the extract, and if the multiple types of expanders can be separated by molecular weight, the expander is separated by column chromatography based on a difference in molecular weight. In the case where it is difficult to separate the expander with the difference in molecular weight, the organic expander of the present application is separated by a precipitation separation method with the use of a difference in solubility that varies depending on the type of the functional group of the expander and/or the amount of the functional group. Specifically, an aqueous sulfuric acid solution is added dropwise to a mixture obtained by dissolving the extract in an NaOH aqueous solution to adjust the pH of the mixture, thereby aggregating and separating the organic expander. In the case where the separate by aggregation is difficult, the organic expander is separated by ion exchange chromatography or affinity chromatography with the use of a difference in the type or amount of the functional group. The insoluble component is removed by filtration as described above from the separated material dissolved again in the NaOH aqueous solution. In addition, the remaining solution after separating the organic expander is concentrated. In the case where the obtained concentrate contains other expanders, the insoluble component is removed from the concentrate by filtration as described above.

In the specification, the fully charged state of the lead-acid battery is a state after, in the case of a flooded-type battery, constant current charge at a current (A) that is 0.2 times as large as the numerical value described for the rated capacity (Ah) in a water tank at 25°C until reaching 2.5 V/cell, and then further constant current charge at a current (A) that is 0.2 times as large as the numerical value described for the rated capacity (Ah) for 2 hours. In the case of a valve regulated battery, the fully charged state is a state where the lead-acid battery is subjected to constant current constant voltage charge of 2.23 V/cell at a current (A) 0.2 times as large as the numerical value described for the rated capacity (Ah) in an air tank of 25°C, and the charge is completed when the charge current (A) during constant voltage charge becomes 0.005 times as large as the numerical value described in the rated capacity (Ah).

Note that the lead-acid battery in the fully charged state refers to a battery obtained by fully charging a formed lead-acid battery. The full charge of the lead-acid battery may be performed immediately after formation so long as being performed after formation or may be performed after the lapse of time from formation. For example, a lead-acid battery in use (preferably at the initial stage of use) may be fully charged. More specifically, the battery at the initial stage of use refers to a battery that has not been used for a long time and has hardly deteriorated.

### (C-2) Calculation of molar ratio of constituent units of expander

The organic expander sample separated similarly to (C-1) mentioned above is dissolved in a deuterated water solution of sodium hydroxide (pH 10 to 13) to prepare a sample, and with the use of this sample, ¹H-NMR is measured. In the ¹H-NMR spectrum, a peak derived from the bisphenol S unit (first unit) is observed in the range of 6.5 ppm or more and 6.6 ppm or less, and a peak derived from the phenol sulfonic acid unit (second unit) is found in the range of more than 6.6 ppm and 7.0 ppm or less. The molar ratio between the bisphenol S unit and the phenol sulfonic acid unit can be calculated as compared with the peak intensities of ¹H-NMR obtained with the use of a known expander.

In addition, in the case where the organic expander contains the third unit, the molar ratio of the third unit is determined by selecting a peak derived from the third unit, based on the structure of the expander type identified in accordance with the above-mentioned procedure and the ¹H-NMR spectrum mentioned above, and calculating the ratio of the peak intensity to the sum of the peak intensities of the bisphenol S unit (first unit) and phenol sulfonic acid unit (second unit).

Note that the molar ratios are calculated from the peak intensities, but can also be calculated from the integral values of the peaks.

### (C-3) Measurement of content of organic expander

The content of the organic expander in the negative electrode material is regarded as a blending amount (c2 (% by mass)). In the cased of disassembling the lead-acid battery and then determining the content c2 of the organic expander contained in the negative electrode material of the removed negative electrode plate, the content c2 is determined in accordance with the following procedure.

In accordance with the procedure similar to (C-1) mentioned above, for the separated material containing the organic expander, a solution is obtained after removing the insoluble component by filtration. For the obtained solution, the ultraviolet-visible absorption spectrum is measured. Then, based on this ultraviolet-visible absorption spectrum, the content (c1 (% by mass)) of the organic expander in the negative electrode material is calculated with the use of a calibration curve prepared in advance.

The content c1 of the organic expander measured may be a value that is different from the content (c2 (% by mass)) of the organic expander in the negative electrode material (100 % by mass) prepared in preparing the lead-acid battery. Thus, a lead-acid battery including the content c2 of the organic expander is prepared, the content c1 of the organic expander is measured as mentioned above from the prepared lead-acid battery, the ratio R (= c1/c2) between the contents c1 and c2 is determined in advance, and with the use of the ratio R, the content c2 of the organic expander is calculated from the content c1 of the organic expander determined as mentioned above from the lead-acid battery.

In the case where the negative electrode material contains another expander, the content thereof in a separated material containing the expander is measured in accordance with the case of the organic expander.

In the case where, in obtaining a battery from another company and then measuring the content of the expander, the same expander fails to be used for the calibration curve because the structural formula of the expander fails to be strictly identified, the content of the expander is measured using the ultraviolet-visible absorption spectrum by creating a calibration curve with the use of the expander extracted from the negative electrode of the battery and a separately available expander from which the ultraviolet-visible absorption spectrum, the infrared spectroscopic spectrum, the NMR spectrum, and the like exhibit similar shapes. In addition, the ratio R is also determined with the use of this available expander.

### (D) Analysis of carbonaceous material

To 10 g of the sample crushed so as to allow the sample to be put in a case, 50 ml of a nitric acid is added, and the mixture is heated for about 20 minutes to dissolve the lead component as a lead nitrate. Next, a solution containing lead nitrate is filtered, and solids such as carbonaceous materials are filtered off.

The obtained solid is dispersed in water to form a dispersion, and then components except for the carbonaceous material (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C. The mass (ma) of the mixed sample is measured by subtracting the mass of the membrane filter from the total mass of dried mixed sample and the membrane filter. Thereafter, the dried mixed sample is placed in a crucible together with a membrane filter and is burned and incinerated at 700°C or higher. The residue remaining is a metal oxide. The mass of the metal oxide is converted to the mass of the metal sulfate to determine the mass (mb) of the metal sulfate. The mass of the carbonaceous material is calculated by subtracting the mass mb from the mass ma.

### (Lead-acid battery)

A lead-acid battery includes the negative electrode plate mentioned above, a positive electrode plate, and an electrolyte solution. Between the negative electrode plate and the positive electrode plate, a separator may be interposed. The negative electrode plate, the positive electrode plate, and the separator interposed therebetween may form an element. The lead-acid battery can be manufactured, for example, by housing the positive electrode plate and the negative electrode plate (or the element), and the electrolyte solution in a container.

### (Positive electrode plate)

The positive electrode plate of the lead-acid battery includes a paste type and a clad type.

The paste-type positive electrode plate includes a positive current collector and a positive electrode material. The positive electrode material is held by the positive current collector. In the paste-type positive electrode plate, the positive electrode material is obtained by removing the positive current collector from the positive electrode plate. The positive current collector only needs to be formed similarly to the negative current collector and can be formed by casting lead or a lead alloy or by processing a lead or a lead alloy sheet.

The clad-type positive electrode plate includes a plurality of porous tubes, a spine inserted into each tube, a positive electrode material with which a spine inserted tube is filled, and a joint that couples the plurality of tubes. In the clad-type positive electrode plate, the positive electrode material is a material obtained by removing the tube, the spine, and the joint from the positive electrode plate.

As a lead alloy used for the positive current collector, a Pb-Sb-based alloy, a Pb-Ca-based alloy, or a Pb-Ca-Sn-based alloy are preferred in terms of corrosion resistance and mechanical strength. The positive current collector may have lead alloy layers having different compositions, and a plurality of alloy layers may be provided. For the spine of the clad-type positive electrode plate, a Pb-Sb-based alloy is preferably used.

The positive electrode material contains a positive active material (lead dioxide or lead sulfate) that exhibits a capacity through a redox reaction. The positive electrode material may optionally contain another additive.

A non-formed paste-type positive electrode plate is obtained by filling a positive current collector with a positive electrode paste, and curing and drying the paste, according to the case of the negative electrode plate. Thereafter, the non-formed positive electrode plate is formed. The positive electrode paste is prepared by mixing lead powder, an additive, water, and sulfuric acid.

A clad-type positive electrode plate is formed by filling a tube, into which a spine is inserted with a lead powder or a slurry-like lead powder, and joining a plurality of tubes with a joint.

### (Separator)

Between the negative electrode plate and the positive electrode plate, a separator is typically disposed. For the separator, a material is used, such as a nonwoven fabric or a microporous membrane. The thickness and the number of the separators interposed between the negative electrode plate and the positive electrode plate may be selected in accordance with the distance between the electrodes.

The nonwoven fabric is a mat in which fibers are intertwined without being woven and is mainly made of fibers. For example, 60% by mass or more of the separator is formed from fibers. As the fibers, there can be used glass fibers, polymer fibers (e.g., polyolefin fiber, acrylic fiber, polyester fiber such as polyethylene terephthalate fiber), pulp fibers, and the like. Among them, glass fibers are preferable. The nonwoven fabric may contain components in addition to the fibers, such as acid-resistant inorganic powder, a polymer as a binder, and the like.

On the other hand, the microporous film is a porous sheet mainly made of components except for fiber components and is obtained by, for example, extrusion molding a composition containing, for example, a pore-forming additive (polymer powder, oil, and/or the like) into a sheet shape and then removing the pore-forming additive to form pores. The microporous film is preferably made of a material having acid resistance and is preferably composed mainly of a polymer component. As the polymer component, a polyolefin such as polyethylene or polypropylene is preferable.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

### (Electrolyte solution)

The electrolyte solution is an aqueous solution containing sulfuric acid and may be gelled as necessary. In addition, ions such as sodium ions and aluminum ions may be added to the electrolyte solution. The specific gravity of the electrolyte solution in the lead-acid battery in the fully charged state at 20°C is, for example, 1.10 g/cm³ or more and 1.35 g/cm³ or less.

Fig. 1 shows an example of the appearance of a lead-acid battery according to an embodiment of the present invention.

A lead-acid battery 1 includes a container 12 that houses an element 11 and an electrolyte solution (not shown). The inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and positive electrode plates 3 with a separator 4 interposed therebetween. Here, the bag-shaped separator 4 housing the negative electrode plate 2 is shown, but the form of the separator is not particularly limited. In the cell chamber 14 located at one end of the container 12, a negative electrode shelf portion 6 for connecting the plurality of negative electrode plates 2 in parallel is connected to a penetrating connection body 8, and a positive electrode shelf portion 5 for connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf portion 6, and the penetrating connection body 8 is connected to the positive electrode shelf portion 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.

### [EXAMPLES]

Hereinafter, the present invention will be specifically described based on examples and comparative examples, but the present invention is not limited to the following examples.

### [Example 1]

### (Lead-acid battery Nos. 1 to 10)

### (1) Preparation of negative electrode plate

First, a lead alloy sheet made of a Pb - 0.09% Ca - 0.3% Sn alloy is subjected to casting, and in a subsequent rolling step, a conventional lead alloy sheet that has a sheet surface subjected to rolling with an unrough plate and lead alloy sheets that have surfaces roughened by rolling with plates various types of roughness are formed, and then each expanded to prepare expanded type current collectors. The current collector subjected to no roughening treatment was 0.7 microns in surface roughness Ra, and the roughened current collectors were 1 to 200 microns in surface roughness Ra.

Mesh parts of the expanded current collectors are filled with a negative electrode paste prepared by mixing a lead powder, water, a dilute sulfuric acid, carbon black, and an organic expander, and subjected to curing and drying to obtain non-formed negative electrode plates. The amount of the carbon black added is adjusted such that the content thereof contained in 100% by mass of the negative electrode material is 0.30% by mass. The amount of the organic expander added was adjusted such that the formaldehyde condensate of a bisphenol S and a phenol sulfonic acid (= 2 : 8 (molar ratio)) (abbreviated as SP) was 0.10% by mass with respect to 100% by mass of the negative electrode material, and the organic expander was then blended into the negative electrode paste.

### (2) Preparation of positive electrode plate

A lead powder, water, and a sulfuric acid are mixed to prepare a positive electrode paste, and a mesh part of an expanded current collector of Pb - 0.065% Ca - 1.3% Sn-based alloy subjected to no roughening treatment as a positive current collector is filled with the positive electrode paste, and subjected to curing and drying to obtain a non-formed positive electrode plate.

### (3) Preparation of lead-acid battery

The non-formed negative electrode plate was housed in a bag-shaped separator formed of a polyethylene microporous membrane, and an element is formed of five non-formed negative electrode plates and four non-formed positive electrode plates.

The element is inserted into a container, the container is filled with an electrolyte solution, and formation is performed in the container to assemble two flooded-type lead-acid batteries with a nominal voltage of 2 V and a rated capacity of 30 Ah (5 hour rate) for each of batteries Nos. 1 to 10. As the electrolyte solution, an aqueous solution containing a sulfuric acid with a specific gravity of 1.28 at 20°C is used.

One of the batteries was disassembled at the stage before the life test, and the volume median pore diameter of the negative electrode material was measured with the use of a porosimeter ("Autopore IV 9505" from Shimadzu Corporation). In addition, the gap between the negative current collector and electrode material of the negative electrode plate was subjected to the measurement at five points per plate, and the average value for the gap was calculated. The other battery was subjected to the life test shown in Table 1 for 1,440 cycles (repeating 480 cycles three times), and then disassembled, and the gap between the negative current collector and electrode material of the negative electrode plate was calculated similarly.

**[Table 1]**

| Step | Content | Test condition | Stopping condition | Temperature |
|---|---|---|---|---|
| 1 | Determination discharge | 340 A | 30 seconds | 75°C in water tank |
| 2 | Recovery charge | 2.47V/25A | 10 minutes | |
| 3 | Discharge | 25A | 4 minutes | |
| 4 | Charge | 2.47V /25A | 10 minutes | |
| 5 | Steps 3 and 4 repeated | | 480 times | |
| 6 | Pause | | 56 hours | |
| 7 | Returning to step 1 | | | |

From the results shown in Table 2, it has been determined that when the surface of the current collector is roughened to roughness Ra: 1 micron or more and 50 microns or less, the gap between the current collector and the electrode material is small even after the life test, with favorable adhesion therebetween. In particular, with Ra: 2 microns to 20 microns, the adhesion is more favorable.

The reason therefor is not clear, but the fine negative electrode material is believed to have entered into irregularities at the surface of the fine negative current collector to improve the adhesion force between the current collector and the electrode material.

**[Table 2]**

| Battery no. | Negative electrode plate | | | | | Gap between current collector/ electrode material (mm) | | Remarks |
|---|---|---|---|---|---|---|---|---|
| | Current collector | | | Electrode material | | Before life test | After life test (1,440 cycles) | |
| | Type | Average surface roughness Ra [µm] | Roughening treatment performed | Type of expander | Volume median pore diameter [µm] | | | |
| 1 | Expanded | 0.7 | No | S P | 0.8 | 0 | 1.5 | |
| 2 | | 1 | Yes | | | 0 | 1.2 | Present invention |
| 3 | | 2 | | | | 0 | 0.7 | Present invention |
| 4 | | 5 | | | | 0 | 0.48 | Present invention |
| 5 | | 10 | | | | 0 | 0.6 | Present invention |
| 6 | | 20 | | | | 0 | 0.7 | Present invention |
| 7 | | 30 | | | | 0 | 0.9 | Present invention |
| 8 | | 50 | | | | 0 | 1.2 | Present invention |
| 9 | | 100 | | | | 0 | 1.5 | |
| 10 | | 200 | | | | 0 | 1.6 | |

### [Example 2]

### (Lead-acid battery Nos. 11 to 17)

### (1) Preparation of negative electrode plate

A lead sheet made of a Pb - 0.09% Ca - 0.3% Sn alloy is subjected to casting, and in a subsequent rolling step, a conventional lead alloy sheet that has a sheet surface subjected to rolling with an unrough plate and lead alloy sheets that have surfaces roughened by rolling with a roughened plate are formed, and then subjected to punching to prepare punched type current collectors. The current collector subjected to no roughening treatment was 0.7 microns in surface roughness Ra, and the current collectors subjected to the roughening treatment were 4.3 microns in surface roughness Ra.

In contrast, the punched parts of the punched current collectors are filled with a negative electrode paste prepared by mixing a lead powder, water, a dilute sulfuric acid, carbon black, and an organic expander, and subjected to curing and drying to obtain non-formed negative electrode plates. The amount of the carbon black added is adjusted such that the content thereof contained in 100% by mass of the negative electrode material is 0.30% by mass. For the organic expander, in addition to the same SP type as in Example 1, a condensate obtained by condensing a bisphenol S and a bisphenol A (= 7 : 3 (molar ratio)) and a formaldehyde in the presence of a sodium sulfite, abbreviated as SA) and a lignin sulfonic acid compound (VANILLEX N, abbreviated as VN, from Nippon Paper Industries Co., Ltd.) as a natural organic expander were each added to reach 0.10% by mass with respect to 100% by mass of the negative electrode material. Further, a negative electrode plate (No. 16) was also prepared in which the amount of the SP type added was limited to 0.07% by mass.

### (2) Preparation of positive electrode plate

The preparation is the same as Example 1.

### (3) Preparation of lead-acid battery

Flooded-type lead-acid batteries Nos. 11 to 17 with a nominal voltage of 2 V and a rated capacity of 30 Ah (5 hour rate) are assembled in accordance with the same configuration and manufacturing method as in Example 1. As the electrolyte solution, an aqueous solution containing a sulfuric acid with a specific gravity of 1.28 at 20°C is used.

Two batteries are prepared for each of the batteries Nos. 11 to 17, and one of the two is subjected to the life test in Table 1 for 1,440 cycles (repeating 480 cycles three times), and discharged at a current of 150 A at - 15°C before and after the life test for measuring the duration time of discharge performed until the terminal voltage reached 1.0 V (abbreviated as low-temperature HR discharge). The other one was disassembled at the stage before the life test, and the volume median pore diameter of the negative electrode material was measured with the use of a porosimeter ("Autopore IV 9505" from Shimadzu Corporation).

From the test results shown in Table 3, in the case of using the negative electrode plate with the SP-type organic expander added on the negative current collector with the surface subjected to the roughening treatment, the electrode material has fine pores with the volume median pore diameter of less than 2.0 microns, the initial low-temperature HR discharge performance is favorable, and moreover, favorable performance is shown even after the use for a long period of time.

In the case of the VN type or SA type organic expander, the pore diameter of the electrode material is as large as 2.0 microns even in the negative current collector with the surface roughened, and thus, the low-temperature high-rate performance after the life test is largely degraded.

Note that in the case of using the negative current collector with the unrough surface, the low-temperature high-rate performance after the life test is largely degraded, even with fine pores formed with the use of the SP-type organic expander.

More specifically, only if the electrode material with a small pore diameter is applied to the negative current collector with fine irregularities, the adhesion between the negative current collector and the negative electrode material can be considered maintained, and the performance can be considered less likely to be degraded even in used for a long period of time.

As described above, the present invention relates to the adhesion between a current collector of and an electrode material of a negative electrode plate, and has a large effect particularly in applications that require large-current inputs and outputs, such as automobiles (including, e.g., two-wheels and three-wheels) applications.

**[Table 3]**

| Battery no. | Negative electrode plate | | | | | Low-temperature HR discharge duration time (second) | | Remarks |
|---|---|---|---|---|---|---|---|---|
| | Current collector | | | Electrode material | | Before life test | | |
| | Type | Average surface roughness Ra [µm] | Roughening treatment performed | Type of expander | Volume median pore diameter [µm] | | After life test (1,440 cycles) | |
| 11 | Punched | 0.7 | No | V N | 2.0 | 270 | 66 | |
| 12 | | | | S A | 2.0 | 291 | 74 | |
| 13 | | | | S P | 0.8 | 295 | 75 | |
| 14 | | 4.3 | Yes | V N | 2.0 | 269 | 70 | |
| 15 | | | | S A | 2.0 | 290 | 79 | |
| 16 | | | | S P | 1.4 | 293 | 92 | Present invention |
| 17 | | | | | 0.8 | 294 | 93 | Present invention |

### INDUSTRIAL APPLICABILITY

The negative electrode plate and lead-acid battery according to one aspect of the present invention is applicable to valve regulated and flooded-type lead-acid batteries. The lead-acid battery can be suitably used as a power source for starting a vehicle such as an automobile or a motorcycle, and a power source for an industrial energy storage apparatus or the like, such as a natural energy storage or an electric vehicle (e.g., forklift).

### DESCRIPTION OF REFERENCE SIGNS

- 1:: lead-acid battery
- 2:: negative electrode plate
- 3:: positive electrode plate
- 4:: separator
- 5:: positive electrode shelf portion
- 6:: negative electrode shelf portion
- 7:: positive pole
- 8:: penetrating connection body
- 9:: negative pole
- 11:: element
- 12:: container
- 13:: partition
- 14:: cell chamber
- 15:: lid
- 16:: negative electrode terminal
- 17:: positive electrode terminal
- 18:: vent plug

## Claims

1. A negative electrode plate for a lead-acid battery, comprising:
a negative current collector of which surface average roughness Ra is 1 micron or more and 50 microns or less; and
a negative electrode material of which volume median pore diameter is less than 2.0 microns.

2. The negative electrode plate for a lead-acid battery according to claim 1, wherein a surface average roughness Ra of the negative current collector is 2 microns or more and 20 microns or less.

3. The negative electrode plate for a lead-acid battery according to any one of claim 1 or 2, wherein the negative electrode material comprises a condensate having a bisphenol S unit and a phenol sulfonic acid unit.

4. The negative electrode plate for a lead-acid battery according to any one of claims 1 to 3, wherein the negative current collector is an expanded grid or a punched grid which are obtained by processing a lead or lead alloy sheet.

5. A lead-acid battery comprising: the negative electrode plate for a lead-acid battery according to any one of claims 1 to 4; a positive electrode plate; and an electrolyte solution.

6. A method for manufacturing the negative electrode plate for a lead-acid battery according to claim 4, wherein an expanded grid or a punched grid is prepared, the grid having a surface roughened by rolling with a member with predetermined surface roughness.
